Europäisches Patentamt

European Patent Office

Office européen des brevets

(11) Publication number: **0 387 680**
**A2**

## (12) EUROPEAN PATENT APPLICATION

(21) Application number: **90104327.3**

(22) Date of filing: **07.03.90**

(51) Int. Cl.5: **F25D 21/06, F25D 29/00**

(30) Priority: **14.03.89 IT 4571489**

(43) Date of publication of application:
**19.09.90 Bulletin 90/38**

(84) Designated Contracting States:
**DE DK ES FR GB IT NL SE**

(71) Applicant: **INDUSTRIE ZANUSSI S.p.A.**
**Via Giardini Cattaneo 3**
**I-33170 Pordenone(IT)**

(72) Inventor: **Marega, Paolo**
**Via Aquileia 13**
**I-33084 Cordenons, Pordenone(IT)**
Inventor: **Giambattista, Riccardo**
**Via Dolomiti 11**
**I-36061 Bassano del Grappa, Vicenza(IT)**

(74) Representative: **Giugni, Valter et al**
**PROPRIA Protezione Proprietà Industriale**
**S.p.A. Via Mazzini 13**
**I-33170 Pordenone(IT)**

(54) Refrigerating appliance with thermostatic temperature control arrangement.

(57) The refrigerating appliance (3) comprises a refrigerating circuit (6 to 10) controlled by thermostatic temperature control means (12) to perform alternate refrigeration and defrost phases for keeping a compartment (5) at a predetermined average temperature. A control device (11) is capable of interrupting operation of the refrigerating circuit to start a forced defrost phase, by-passing said thermostatic control means (12), when a refrigeration phase lasts longer than a predetermined maximum period.

The forced defrost phase may be time-controlled or controlled thermostatically by said control means (12).

Fig. 2

EP 0 387 680 A2

The present invention relates to a refrigerating appliance, particularly a domestic refrigerating appliance, comprising a refrigerating circuit provided with a thermostatic temperature control arrangement.

Refrigerating appliances of this kind are well known and mainly comprise at least a thermally insulated compartment which is chilled by the evaporator of a refrigerating circuit, this latter being preferably of the compressor type. The temperature inside the compartment is adjusted by means of thermostatic control means capable of detecting the temperature of the evaporator surface and/or the air inside the compartment and controlling operation of the compressor accordingly. In particular, the thermostatic control means are able to actuate the compressor when a temperature is detected exceeding a first predetermined value, and to deenergize the compressor, in order to initiate a corresponding evaporator defrost phase, when a temperature is detected which is lower than a second predetermined value.

As a result, the average temperature inside the refrigerated compartment is a function of the ON/OFF ratio in the operating cycle of the compressor, and additionally of the general dimensions of the refrigerating appliance, of its state of loading and of the ambient temperature.

In particular, substantial changes in the ambient temperature may affect the performances of the refrigerating appliance. For example, if the refrigerating appliance is designed to work correctly at the low ambient temperatures of the winter season, then the thermostatic control means would operate the compressor with a much higher ratio between the work and inoperative phases of the compressor during the summer season, in order to keep the average temperature inside the refrigerated compartment at a predetermined constant value.

Furthermore, it is common practice to open the access door of the refrigerating appliance more often during the summer season, which causes moisture and heat to enter the refrigerated compartment.

As a consequence, the ON/OFF ratio of the compressor and the relevant energy consumption may be undesirably remarkable while obtaining unsatisfactory thermal performances in the refrigerating appliance. Under particularly heavy operating conditions, the refrigerating appliance may even run continuously, with no inoperative phases of the compressor.

Generally speaking, the above inconveniences occur whenever the refrigerating appliance is installed in a high temperature environment and/or its loading conditions are particularly heavy.

It is the object of the present invention to provide a refrigerating appliance with thermostatic temperature control arrangement which is of simple construction and capable of providing excellent thermal performances regardless of changes in the ambient temperature and/or its loading conditions.

According to the present invention, the above object is attained in a refrigerating appliance embodying the features of the appended claims.

The characteristics and advantages of the present invention will become apparent from the following description, given by way of example only, with reference to the accompanying drawings, wherein:

- Fig. 1 diagrammatically shows a refrigerating appliance according to the invention:

- Fig. 2 shows an embodiment of a circuit for controlling the refrigerating appliance of Fig. 1;

- Fig. 3 shows another embodiment of the control circuit of Fig. 2.

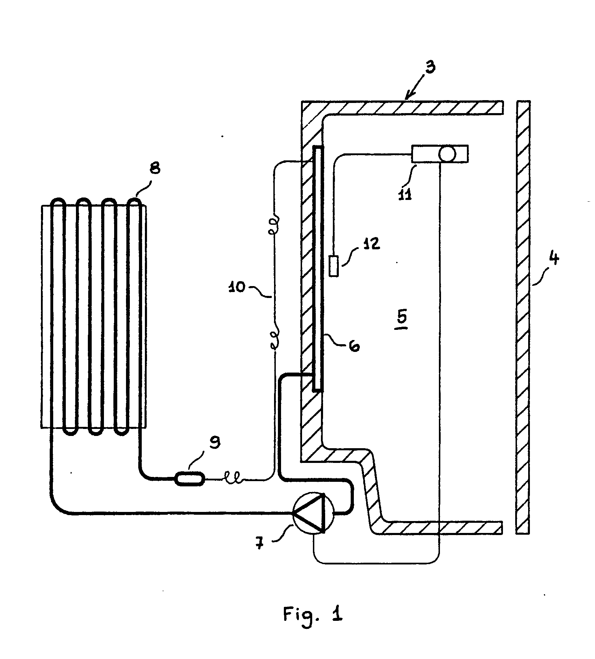

With reference in particular to Fig. 1, the refrigerating appliance according to the invention includes a thermally insulated cabinet 3 provided with a door 4 giving access to at least a refrigerated compartment 5 capable of storing items at a predetermined average temperature. In correspondence of the storage compartment 5, and in heat-exchange relationship therewith, is provided an evaporator 6 which is connected in a refrigerating circuit also comprising a compressor 7, a condenser 8, a dehydrating filter 9 and a throttling element 10.

The refrigerating appliance is also provided with a control device 11, placed for instance inside the compartment 5 and associated with thermostatic temperature control means including at least a probe 12 which is preferably adjacent to the evaporator 6 and capable to indirectly detect the temperature thereof.

In a way known per se, the control device 11 and the probe 12 determine the beginning and duration of the alternate ON and OFF phases of the compressor 7 so as to normally keep compartment 5 at a predetermined average temperature, which may be adjusted through the control device 11 itself. Also in a way known per se, during the OFF phases of compressor 7 corresponding defrost phases of the evaporator 6 occur automatically.

According to the invention, the control device is also able to interrupt operation of the refrigerating circuit to start a defrost phase, by-passing the thermostatic control probe 12, when a refrigeration phase lasts longer than a predetermined maximum period.

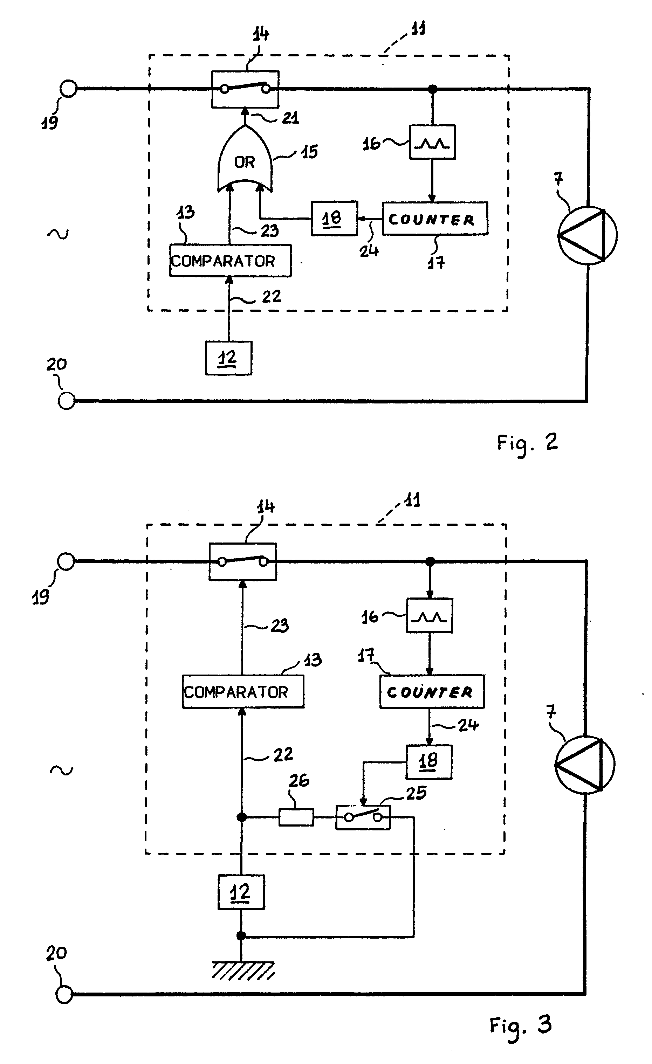

For example, the control device 11 may be arranged as shown in Fig. 2, wherein compressor 7 is connected to terminals 19, 20 of a power supply source via a controlled switch 14. The controlled switch 14 is for instance of the electronic type normally closed (as shown in Fig. 2) and capable of switching to its open position when a logic signal "1" is received at its control input 21.

The probe 12 is of the thermistor type (including a PTC, for instance) and in a way known per se feeds a signal corresponding to the detected temperature to a control input 22 of a threshold stage 13, this latter including for example a hysteresis comparator. In a known way, threshold stage 13 is capable of generating at its output 23 a logic signal "0", or a logic signal "1", when its input 22 receives a signal which is representative of a temperature higher than a first predetermined value A or lower than a second predetermined value B, respectively, provided that A is higher than B. The output 23 of threshold stage 13 is connected with an input of an "OR" gate circuit 15, whose output is in turn connected with the control input 21 of switch 14.

According to an aspect of the invention, also a pulse generator 16 is supplied through the controlled switch 14. The pulse generator 16 is capable of generating a pulse in correspondence of every half-wave of the supply voltage across terminals 19, 20. The output of pulse generator 16 drives a counter stage 17 which is capable of producing at its output 24 a logic signal "1" only after having counted a predetermined number N of pulses from generator 16. The output 24 of counter 17 drives a second input of gate 15 through a timer stage 18, including for instance a time constant circuit. Timer stage 18 is apt to transfer the logic signal "1" from counter 17 to its own output, where it lasts for a time period t depending on the time constant of the timer. For example, such a time period t may have a duration of 60 minutes and the counter 17 may be arranged to count the said number N of pulses after about 6 hours of continuous operation.

When probe 12 detects a temperature higher than the said value A, the threshold stage 13 generates at its output a logic signal "0" which drives the corresponding input of the gate 15, whose second input also is normally at a logic level "0". Thus, the output of gate 15 drives with a logic level "0" the control input 21 of switch 14, which keeps being closed. Therefore, the compressor 7 is supplied to perform a phase of refrigeration of the storage compartment 5.

Such a refrigeration phase normally lasts until probe 12 detects a temperature lower than the said value B, so that the output 23 of threshold stage 13 switches to a logic level "1". This level "1" is transferred through the gate 15 to the control input of switch 14, which accordingly is opened, in this way disconnecting the compressor 7 to perform a defrost phase of evaporator 6.

It is to be pointed out that normally the timing means including stages 16 to 18 do not affect at all the general operation of the refrigerating appliance. This latter performs in a common way alternate refrigeration and defrost phases, controlled thermostatically by probe 12, to keep the storage compartment 5 at the predetermined average temperature, for instance at about + 5°C.

However, as stated before, it may happen that under particularly heavy operating conditions an operative phase of the compressor 7 undesirably lasts a long time, even several hours. This may occur, for example, in case too much frost builds up on the evaporator 6, thereby remarkably diminishing its heat-exchange relationship with the storage compartment 5. Under these conditions, probe 12 always detects a relatively high temperature, higher than value B, so that the output 23 of threshold stage 13 is maintained at a logic level "0" and switch 14 tends to be kept in its closed position, thereby continuing to supply compressor 7 and pulse generator 16.

According to an aspect of the invention, however, as soon as counter 17 counts a number N of pulses from the stage 16, that is to say, after a maximum period T having for instance a duration of 6 hours, as already stated, the output 24 of the counter 17 switches to a logic level "1".

The time constant stage 18 transfers such a logic level "1", through gate 15, to the control input 21 of switch 14, which therefore switches to its closed position regardless of the logic level at the output 23 of threshold stage 13.

In other words, upon termination of the said predetermined maximum period T the counter 17 is reset by the power supply being cut off and compressor 7 is deenergized without respect of the temperature detected by probe 12, which is bypassed by the timer stage 18 via gate 15. As a consequence, a forced inoperative phase of compressor 7 is started, having a predetermined duration t depending on the time constant of timer stage 18, during which stage 18 keeps driving the control input 21 of switch 14 with a logic level "1".

As already stated, the forced inoperative phase of the compressor has a duration of 60 minutes, for example, such that evaporator 6 is substantially defrosted (the thermostatic control probe 12 being ineffective) and once again, therefore, is in a good heat-exchange relationship with the storage compartment 5. The forced defrost phase is terminated when the output of timer stage 18 switches to a logic level "0" again.

At this point the general operation of the refrigerating appliance goes on as described before, with alternate refrigeration and defrost phases which once again are thermostatically controlled by probe 12.

In order to ensure termination of the forced defrost phase when the evaporator 6 is actually defrosted, rather than after a predetermined time, the control device 11 of the refrigerating appliance is preferably as shown in Fig. 3. According to this different embodiment, the gate 15 is not provided and the output 23 of comparator 13 drives controlled switch 14 directly. Moreover, timer stage 18 is arranged with a short time constant, e.g. 3 sec., and its output drives a further controlled switch 25. This latter is normally open and capable to switch to its closed position, in this way connecting an impedance 26 of proper value in parallel with probe 12, when it is driven with a logic level "1" from the output of timer stage 18. Of course, should probe 12 comprise a NTC thermistor, the impedance 26 would be connected in series, rather than in parallel, with the probe itself.

Under normal working conditions, the operation of the circuit shown in Fig. 3 is substantially similar to that described with reference to Fig. 2 and the timing means 16 to 18 and 25, 26 are ineffective. Under particularly heavy operating conditions, however, when an operative phase of compressor 7 lasts longer than the predetermined maximum period T, the counter 17 counts a number N of pulses from the stage 16 and then its output 24 switches to a logic level "1". Timer stage 18 transfers such a logic level "1" to the control input of switch 25, which thereby is closed for the said period of 3 sec.

During this transient phase the impedance 26 is connected in parallel with the probe 12, substantially lowering in this way the value of the signal applied to the input 22 of the hysteresis comparator 13. Therefore, even though probe 12 keeps detecting a temperature higher than the said value B, a signal occurs at the Input 22 of comparator 13 which is "artificially" representative of a temperature lower than the same value B. As a consequence, the output 23 of stage 13 switches to a logic level "1" and causes the controlled switch 14 to become open. The counter 17 is then reset and the compressor 7 is deenergized, so as to start a forced defrost phase during which the probe 12 detects a gradually increasing temperature. After the short period of 3 sec. which is determined by the time constant of timer 18, the controlled switch 25 is opened again, so that probe 12 once again applies to the input 22 of comparator 13 a signal which actually represents the detected temperature. As it is apparent to those skilled in the art, after this transient phase of 3 sec. comparator 13 again is ready to switch the logic state at its output 23 when the signal at its input 22 exceeds the reference value A.

Hence, when probe 12 detects a temperature higher than the said predetermined value A, that is, only when evaporator 6 has been actually defrosted, the output 23 of comparator 13 switches to the logic level "0" again, so as to cause the switch 14 to become closed, therefore starting a new phase of refrigeration of the storage compartment 5. The operation of the appliance then goes on as described before.

From the above description it is apparent that the refrigerating appliance according to the present invention is of simple construction and operation and also provides excellent performances, even under particularly heavy operating conditions.

Obviously, the described refrigerating appliance may undergo a number of modifications without departing from the scope of the invention.

For example, it is apparent to a man skilled in the art that the control arrangement may be of different kind and differently dimensioned, as the case may be.

Furthermore, with regard to the embodiment as in Fig. 3, the control means 16, 17, 18, 25 and 26 may be arranged to temporarily change the values of the reference signals produced by comparator 13, rather than the values of the signals which are applied to its input 22 by probe 12.

At any rate, the refrigerating appliance according to the invention may comprise more than one storage compartment 5 and/or may be also provided with a freezer compartment.

## Claims

1. Refrigerating appliance comprising a refrigerating circuit controlled by thermostatic temperature control means to perform alternate refrigeration and defrost phases for keeping at least a compartment at a predetermined average temperature, characterized in that it further includes a control device (11) capable of interrupting operation of said refrigerating circuit (6 to 18) to start a forced defrost phase, by-passing said thermostatic control means (12), when a refrigeration phase lasts longer than a predetermined maximum period (T).

2. Refrigerating appliance according to claim 1, characterized in that said control device (11) comprises timing means (15 to 18) capable of determining the duration of said forced defrost phase for a predetermined period (t) during which said thermostatic control means (12) are by-passed.

3. Refrigerating appliance according to claim 1, characterized in that said control device (11) comprises timing means (16, 17, 18, 25, 26) capable of by-passing said thermostatic control means (12), to start said forced defrost phase, for a transient period.

Fig. 1

Fig. 2

Fig. 3